(19) **Europäisches Patentamt**
**European Patent Office**
**Office européen des brevets**

(11) **EP 3 732 434 B1**

(12) **EUROPEAN PATENT SPECIFICATION**

(45) Date of publication and mention
of the grant of the patent:
**18.05.2022 Bulletin 2022/20**

(21) Application number: **18845368.2**

(22) Date of filing: **28.12.2018**

(51) International Patent Classification (IPC):
**G01B 3/06** (2006.01)      **G01B 3/16** (2006.01)
**G01B 3/56** (2006.01)      **B43L 7/00** (2006.01)
**B43L 7/12** (2006.01)      **B43L 9/02** (2006.01)
**B43L 13/00** (2006.01)      **B43L 13/20** (2006.01)

(52) Cooperative Patent Classification (CPC):
**G01B 3/563; B43L 7/005; B43L 7/12; B43L 9/02;
B43L 13/002; B43L 13/203; B43L 13/205;
B43L 13/206; G01B 3/06; G01B 3/166**

(86) International application number:
**PCT/IB2018/060672**

(87) International publication number:
**WO 2019/130250 (04.07.2019 Gazette 2019/27)**

(54) **MULTIFUNCTIONAL TOOL**

MULTIFUNKTIONSWERKZEUG

OUTIL MULTIFONCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2017   LT 2017544**

(43) Date of publication of application:
**04.11.2020   Bulletin 2020/45**

(73) Proprietor: **UAB "VILNIAUS PASAZAS"
01115 Vilnius (LT)**

(72) Inventor: **BIELSKIS, Ricardas
01115 Vilnius (LT)**

(74) Representative: **Zaboliene, Reda
Metida
Business center Vertas
Gyneju str. 16
01109 Vilnius (LT)**

(56) References cited:
**CN-U- 201 566 322      CN-Y- 2 483 201
JP-A- S5 777 594      US-B1- 7 043 849**

**Description**

FIELD OF THE INVENTION

The invention relates to the field of measuring tools, more specifically to the field of tools integrating possibilities of measurement of different physical quantities.

DESCRIPTION OF THE RELATED ART

The present invention analyses the following problem: different groups of people need to combine different instruments into a single tool (set) by integrating them. This invention is ideal for children, students, and adults; is also desirable for professionals in specific fields such as engineers, builders, etc. In the present invention, the multifunctional tool will combine up to five instruments: a ruler, a protractor, a compass, a gold ratio measurement, and an incorporated level. In order to meet the needs of the market, multifunctional tools integrating several features are being developed. Multifunctional tools as such are not new to the market, but each of these tools has its own advantages and disadvantages. Especially, many patent documents on this topic can be found in China.

When analysing prior art, the Chinese document CN106739681, published on 31 May 2017, was found. It provides a tool that includes features of a ruler and a protractor wherein one end of the ruler is connected to a middle portion of the base of the protractor. However, the tool described in this document occupies a large overall area, which makes it inconvenient to use.

The Chinese document CN106585218, published on 26 April 2017, was also found. It also combines two instruments: a ruler and a protractor. In this case, the instrument occupies little space, because the base of the protractor performs the function of the ruler, but we have only 2 connected instruments in this combination.

In another Chinese document CN201566322, published on 1 September 2010, we see even 3 connected tools: a ruler, a protractor, and a compass. However, in this structure it is inconvenient to use the protractor as it is attached to legs of the compass that impede to conveniently measure angles.

Another structure of tools of this type is described in an international application WO9712767, published on 10 April 1997. In this structure, a compass is connected with a ruler. This tool is characterized by having two separate rulers on legs of the compass.

JPS 57-77594 discloses a tool that unifies functions of a ruler, a compass and a protractor. It has a golden division point on one of its rulers or compass legs.

Tools that measure the golden ratio can be found on the internet.

However, tools of this type only measure, it is impossible to draw with them. Furthermore, a tool that measures values of the golden ratio combined with other measuring instruments was not found.

In summary, we see that the idea of integrated tools is not new, but still there is space to work in this segment.

The present invention is specific in that it combines more features than there are currently known in prior art. It is also characterized by its own unique compactness and convenience of use.

SUMMARY

This invention provides a multifunctional tool as defined in claim 1, comprising and integrating the following instruments: a ruler, a protractor, a compass, a gold ratio measurement, and, optionally, a level. These tools are interconnected in such a way that they occupy the minimum across dimensions: the length of the tool is close to the length of a leg of the compass, and the width is close to the height of the protractor, i.e., it has a high degree of compactness, it is comfortable to carry and use. This tool also has additional features. One of them is that it has two rulers (left and right) that merge and form a single ruler that can measure distances almost twice the length of one leg of the compass. Furthermore, when using the compass, without an additional external measuring tool, it is possible to quickly and accurately determine the quantity of the desired radius of the compass, the value of which can be seen in a special window on the other (lower) side of the protractor. Similarly, grooves which, when drawing, clearly remain on the drawing surface are formed at values of the ruler at certain intervals to form a certain scale and to facilitate drawing of two-dimensional structures. Furthermore, it is convenient to draw objects of astronomy, parts of the human body, buildings, plants, animals and objects wherein it is important to maintain the value of the golden ratio. A level used to check the level of the plane can also be incorporated.

BRIEF DESCRIPTION OF DRAWINGS

Fig. 1 shows a top view of a multifunctional tool (1), when said tool (1) is in a folded compact state.
Fig. 2 shows a top view of a multifunctional tool (1), when said tool (1) is in a semi-extended state.
Fig. 3 is a top view of a multifunctional tool (1), when said tool (1) is in a fully extended state.
Fig. 4 is a bottom view of a multifunctional tool (1), when said tool (1) is in a folded compact state.
Fig. 5 is a bottom view of a multifunctional tool (1), when said tool (1) is in a semi-extended state.
Fig. 6 is a bottom view of a multifunctional tool (1), when said tool (1) is in a fully extended state.
Fig. 7 shows a general top-side view of a multifunctional tool (1) in various states: folded, semi-extended and fully extended.

Fig. 8 shows all (XYZ) projections of a multifunctional tool (1).

Fig. 9 shows a more detailed embodiment of grooves.

Fig. 10 helps to better understand the calculation of values of angles.

Elements marked in figures are the following:

(1) - a multifunctional tool / in general;
(2a) - a left part of a ruler;
(2b) - a right part of a ruler;
(2c) - a connection point;
(3a) - one leg of a compass;
(3b) - another leg of a compass;
(4a) - a golden ratio measurement pointer;
(4b) - a golden ratio measurement holder;
(4c) - a first connection point of a pointer (4a) and a ruler
(4d) - a second connection point of a holder (4b) and a ruler;
(4e) - a third connection point of a holder (4b) and a ruler (4a);
(5) - a tip of a pointer (4a);
(6) - a protractor;
(7) - a window to see angles of a protractor (6);
(8) - a window to see a radius of a compass;
(9) - grooves.

THE PREFERRED EMBODIMENTS

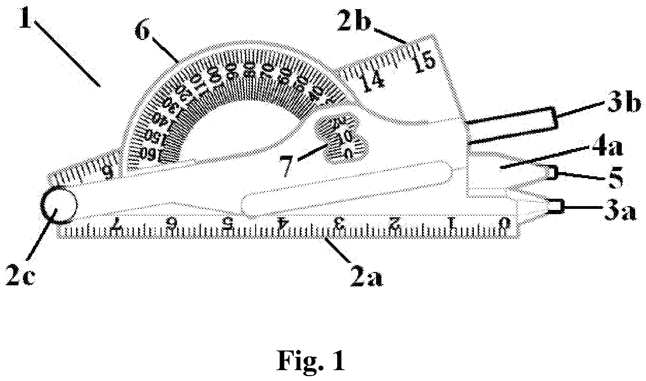

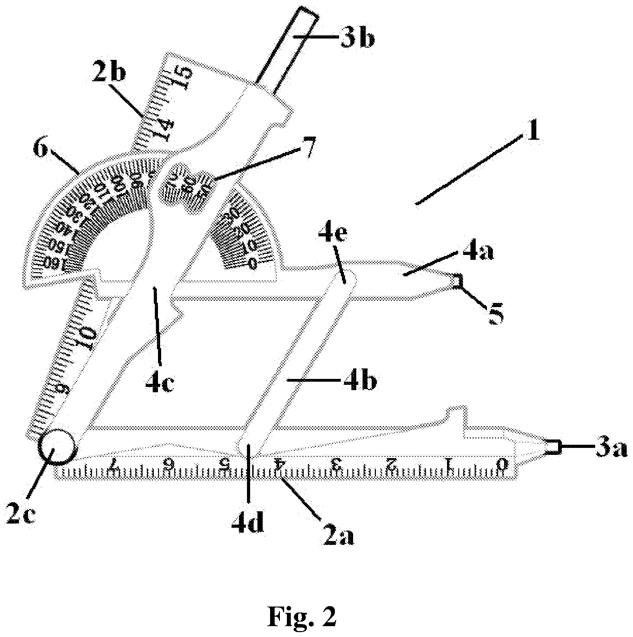

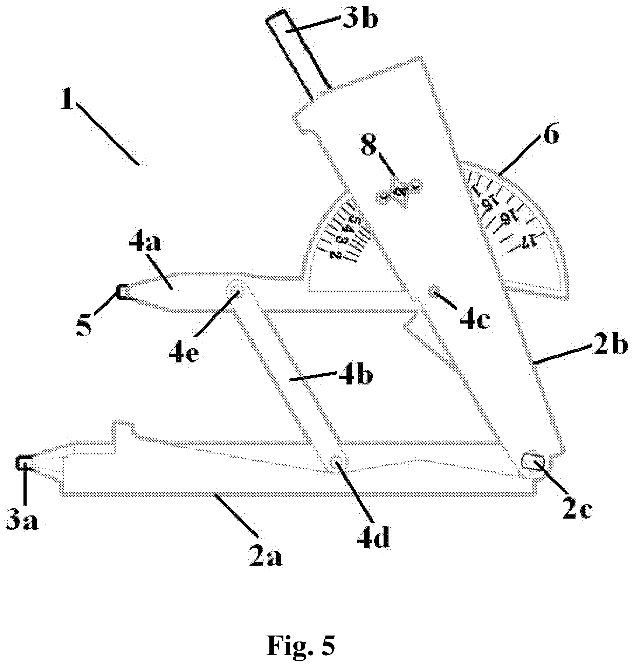

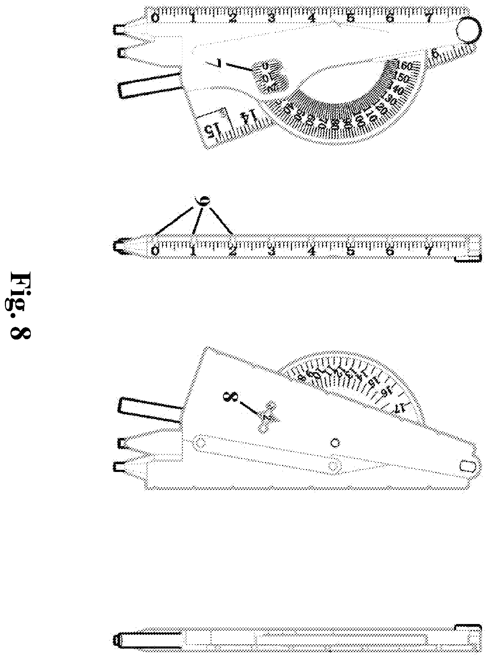

The present invention provides a multifunctional tool (1) as defined in claim 1, comprising and integrating the following four instruments: a ruler, a compass, a protractor, and a gold ratio measurement. It also has additional structural elements that provide additional technical effects and enrich this tool (1) with additional functionality and use. Figures 1-8 provide visual material for a better understanding of the summary and embodiments of the present invention.

The object of the invention is to develop a multifunctional tool that is maximally compact and combines measuring and drawing tools that are often used together. Groups of people for whom this multifunctional tool can be most useful are mentioned below:

schoolchildren and students who have lessons requiring drawing of geometric bodies (e. g. geometry, trigonometry, drawing);
people whose professional activities require drawing on paper or other type of flat surfaces (e. g. people engaged in: logo design, architecture, construction, engineering, sculpture, painting).

Within the scope of the present invention, the **ruler** is understood as a two-part connecting element, i.e., includes a left part (2a) of the ruler and a right part (2b) of the ruler. One ends of these parts (2a, 2b) are connected at the connection point (2c), and other ends (2a, 2b) are free in relation to each other and can move from a fully folded compact state to a fully extended state (Fig. 1-3). Each separate part of the ruler (2a or 2b) can also be used (e.g. for measuring, drawing), but both parts (2a, 2b) merge and form a single part that can be used to measure and draw distances / objects of twice the length (as long as both parts (2a, 2b) form a single part) in the fully extended state.

The **compass** is formed on the basis of said parts (2a, 2b) of the ruler. In order to form a compact connection, one leg (3a) of the compass is integrated into the left part of the ruler (2a) and the other leg of the compass (3b) is respectively integrated into the right part of the ruler (2b). Thereby the compass and the ruler occupy the same overall dimensions. The compass also has a support point (that point is often referred to as the centre of the circle, the needle is often used instead of it) and a drawing means (usually a pencil). Said support point and drawing means are respectively mounted on legs (3a, 3b) of the compass. Furthermore, the support point and drawing means may be interchanged.

The **gold ratio measurement** comprising a pointer (4a) and a holder (4b) is formed between parts of the ruler (2a, 2b). The pointer (4a) is attached to the right part (2b) of the ruler at the first connection point (4c), and the holder (4b) is attached to the left part (2a) of ruler at the second connection point (4d). Said parts of the ruler (2a and 2b) can exchange roles (vice versa). Furthermore, said pointer (4a) and said holder (4b) are also interconnected at the third connection point (4e). Places and distances of each of said connections (4c, 4d, 4e) are chosen empirically so that the tip (5a) of the pointer (4a) will change a place in proportion to the proportional increase of the radius of the compass, and the value of the golden ratio remained between them is approximately equal to 1.618. In addition to what is written, said tip (5) of the pointer (4a) can not only measure but also draw if it is equipped with a corresponding drawing tool (e.g., a pencil). Integration of the gold ratio measurement into the multifunctional tool (2) is one of the more unique moments of the present invention, enabling the user to easily draw objects that require the gold ratio, such as nature views, animals, plants, galaxies, and a host of other objects naturally present on Earth and the universe. In certain embodiments, said pointer (4a) may be shortened, sometimes even to the third connection point (4e).

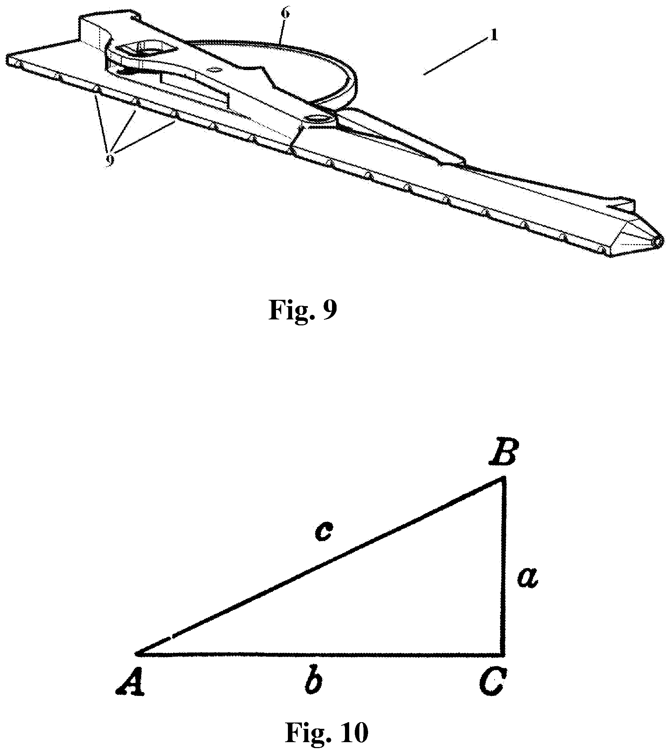

The fourth instrument, integrated into the multifunctional tool (1), is the **protractor** (6). The tool is a common tool that is integrated into multifunctional tools, but in the present invention it is integrated in such a way that it fits perfectly with the entire set of instruments. In the prior art, the protractor is usually connected to the ruler, but in the present invention this variant is not suitable due to the integration of the gold ratio measurement. Before the integration of the protractor, it was observed that the direction of the pointer (4a) is parallel to the direction of the left part (2a) of the ruler. Then by the random experimentation it was found that the protractor (6) can be locked on the pointer (4a) and the leg (3b) of the compass in such a way that the base of the protractor (6) coincides with the part of the pointer (4a). Another trick to see angles of the protractor (6) was that a window (7) was formed in the leg (3b) of the compass through which values of angles of the protractor (6) could be seen. Values of these angles are calculated using the following formula (see Fig. 10):
When: c - constant

a - variable

$$1 \text{ rad} = 180°/\pi \approx 57.3 \ (57.2958...)$$

$\alpha$ - angle between BA and AC

Then:

$$\underline{\alpha\,(a) = Sin^{-1}(a/c)*rad}$$

Respectively
When:

L - the length of one of the legs of the compass measured from the connection point (2c) to the tip of the needle or the pencil;
r - the radius is formed between legs (3a and 3b) and r=2a;
$\gamma$ - the angle is formed between the legs (3a and 3b) of the compass and $\gamma = 2\,\alpha$;

Then:

$$\underline{\gamma(r) = (Sin^{-1}(r/2/L)) \times rad \times 2}$$

Based on this logic, the part of the fast selection of the radius is graded with high accuracy. The error of indication of the radius being drawn will not be completely avoided as, when using the compass, the part of the pencil will shorten (up to -3mm) until it is replaced.

Additionally, a fifth instrument, namely a level, contributes to said four instruments. This is a fluid cylinder with a bubble that is used to check the level of the plane. This part can be mounted at the bottom of the left leg (3a) of the compass.

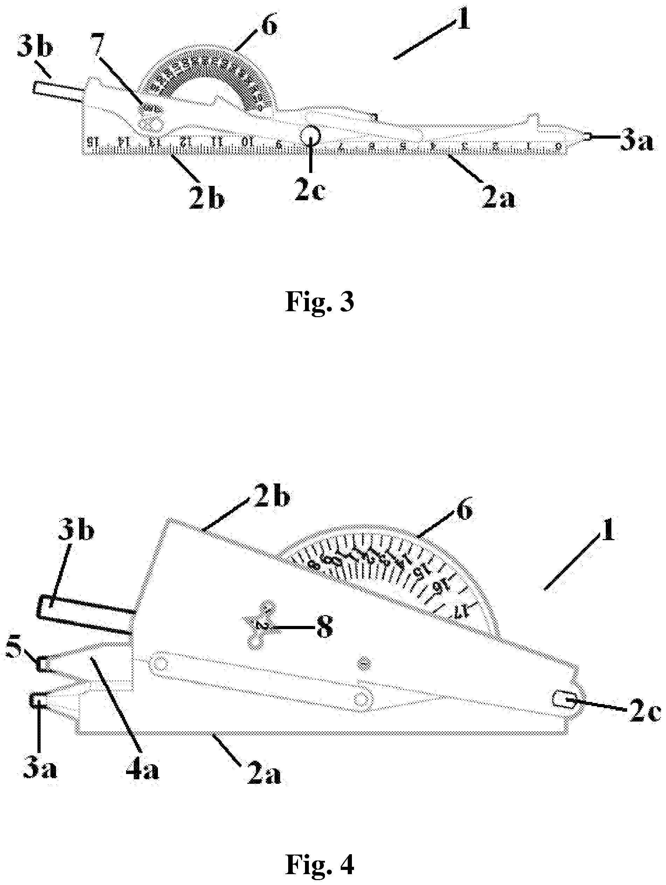

In addition to the standard features of the multifunctional tool (1), there are additional embodiments available. One of the problems existing when working with the compass is the determination of the value of its radius Usually, the value of the radius is determined by measuring the distance between legs (3a, 3b) of the compass using an additional ruler, but this method is very uncomfortable because another ruler is needed, and the distance between legs (3a, 3b) may change (deflate). However, within the scope of the present invention, this problem can be solved. By using standard features of the multifunctional tool (1), we can observe that the angle of the protractor (6) changes proportionally as the distance between legs (3a, 3b) of the compass changes. It is still necessary to standardize the distance of the radius according to angles of the protractor (6) and to represent it. Since angles are values of the protractor, values of the distance of the radius were arranged from the other side of the protractor (6) by forming a window (8) on the right part (2b) of the ruler as shown in Fig. 4-6. This is a unique solution that adds extra convenience to users of this tool (1): the need to carry a ruler along with the pencil is lost - it is no longer needed. This embodiment further contributes to solving the main problem of the present invention.

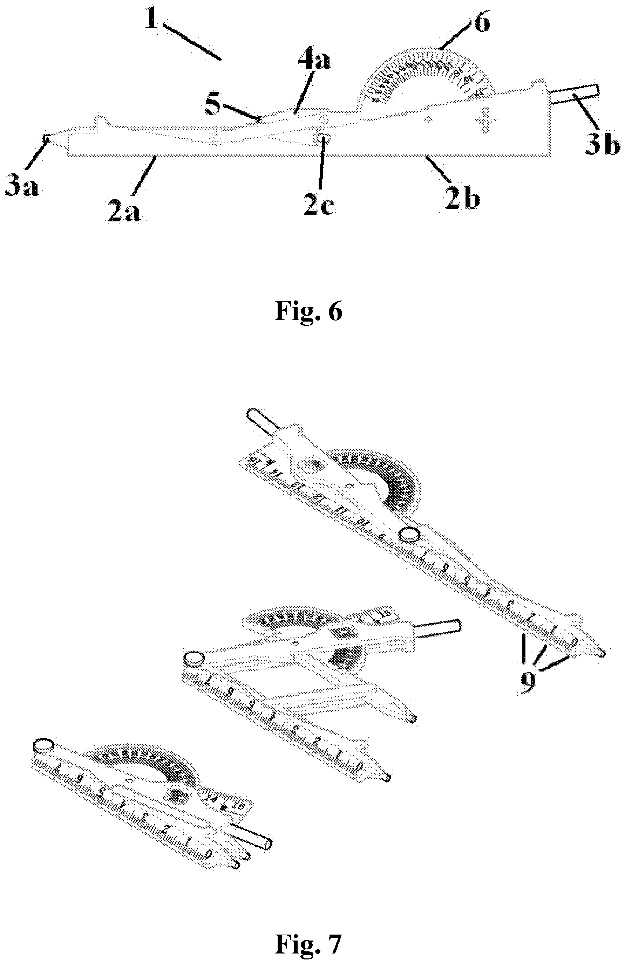

The present invention may further have one more embodiment. The grooves (9) may be periodically formed at values of the ruler at certain intervals as shown in Fig. 7-8. When drawing, these grooves (9) clearly remain on the drawing surface to form a certain scale and/or to facilitate drawing of two-dimensional structures. Also, said grooves / recesses (9) may have a shape (Fig. 9) such that the drawn line will be either straight or with recesses depending on the angle at which the pencil will be held. The shape of these grooves (9) resembles a (narrow) tunnel across the bridge: looking straight above the bridge, the tunnel is not visible and the contour line is straight, the more we move outside the bridge, the more the outline of the tunnel, which determines the appearance of the recess during drawing, becomes clearer.

Parts of the multifunctional tool (1) of the present invention can be made of a variety of materials, such as plastic, metal, wood, sorted paper and other materials having suitable elasticity and firmness. Also, everything can be easily printed with a 3D printer, so manufacture is cheap and these tools (2) would be fully accessible for children. Furthermore, moulding technology can be used for the manufacture of these tools (1).

In order to illustrate and describe the invention, the description of the preferred embodiments is presented above. This is not a detailed or restrictive description to determine the exact form or embodiment. The above description should be viewed more than the illustration, not as a restriction. It is obvious that specialists in this field can have many modifications and variations. The embodiment is chosen and described in order to best understand the principles of the present invention and their best practical application for the various embodiments with different modifications suitable for a specific use or implementation adaptation. It is intended that the scope of the invention is defined by the appended claims, , in which all definitions have meaning within the broadest limits, unless otherwise stated.

In the embodiments described by those skilled in the art, modifications may be made without deviating from the scope of this invention as defined in the following claims.

## Claims

1.  A multifunctional tool (1) comprising a ruler, a compass, a protractor and a gold ratio measurement, **characterized in that** said four integrated tools have the following features:

    - the ruler has a left part of the ruler (2a) and a right part of the ruler (2b), which are connected at a connecting point (2c), wherein both parts (2a, 2b) of the ruler merge and form a single part of the ruler in an extended state;
    - the compass is formed on the basis of two parts of the ruler (2a, 2b), wherein:

        one leg (3a) of the compass is integrated into the left part of the ruler (2a) and the other leg of the compass (3b) is respectively integrated into the right part of the ruler (2b); one leg (3a) of the compass has a support point and the other leg (3b) of the compass has a drawing means;

    - the golden ratio measurement is formed between parts of the ruler (2a, 2b) and comprises a pointer (4a) and a holder (4b), wherein the pointer (4a) is attached to the right part (2b) of the ruler at a first connection point (4c) and the holder (4b) is attached to the left part (2a) of the ruler at a second connection point (4d), said pointer (4a) and said holder (4b) are also interconnected at a third connection point (4e) in such a way that when the radius of the compass increases proportionally, a tip (5) of the pointer (4a) changes the place proportionally and the value of the golden ratio which is approximately 1.618 remains between the tip (5) and the said radius;
    - the protractor is locked on the pointer (4a) and the other leg (3b) of the compass in such a way that the base of the protractor (6) coincides with a part of the pointer (4a).

2.  The multifunctional tool according to claim 1, **characterized in that** the compass and the ruler occupy the same overall dimensions.

3.  The multifunctional tool according to any one of the preceding claims, **characterized in that** the angle of the protractor (6) changes proportionally as the distance between the legs (3a, 3b) of the compass changes.

4.  The multifunctional tool according to any one of the preceding claims, **characterized in that** a window (7) is formed in the other leg (3b) of the compass through which the values of the angles of the protractor (6) can be seen / measured.

5.  The multifunctional tool according to any one of the preceding claims, **characterized in that** a window (8) through which values of the radius of the compass can be seen / measured is formed on the right part (2b) of the ruler.

## Patentansprüche

1.  Multifunktionswerkzeug (1), umfassend ein Lineal, einen Zirkel, einen Winkelmesser und ein Messinstrument für den Goldenen Schnitt, **dadurch gekennzeichnet, dass** die vier integrierten Werkzeuge die folgenden Merkmale aufweisen:

    - das Lineal einen linken Linealteil (2a) und einen rechten Linealteil (2b) aufweist, die an einer Verbindungsstelle (2c) verbunden sind, wobei beide Linealteile (2a, 2b) ineinander übergehen und im verlängerten Zustand ein einziges Lineal bilden;
    - der Zirkel aus zwei Teilen des Lineals (2a, 2b) gebildet ist, wobei: ein Schenkel (3a) des Zirkels in den linken Teil des Lineals (2a) integriert ist und der andere Schenkel des Zirkels (3b) jeweils in den rechten Teil des Lineals (2b) integriert ist; ein Schenkel (3a) des Zirkels einen Stützpunkt aufweist und der andere Schenkel (3b) des Zirkels ein Zeichenmittel hat;
    - das Messinstrument für den Goldenen Schnitt zwischen Teilen des Lineals (2a, 2b) gebildet ist und einen Zeiger (4a) und einen Halter (4b) umfasst, wobei der Zeiger (4a) am rechten Teil (2b) des Lineals am ersten Verbindungspunkt (4c) befestigt ist und der Halter (4b) am linken Teil (2a) des Lineals am zweiten Verbindungspunkt (4d) befestigt ist, wobei der Zeiger (4a) und der Halter (4b) auch am dritten Verbindungspunkt (4e) so miteinander verbunden sind, dass bei proportional zunehmendem Radius des Zirkels die Spitze (5) des Zeigers (4a) proportional den Platz wechselt und der Wert des Goldenen Schnitts von etwa 1,618 zwischen der Spitze (5) und dem Radius erhalten bleibt;
    - der Winkelmesser so auf dem Zeiger (4a) und dem anderen Schenkel (3b) des Zirkels arretiert wird, dass die Basis des Winkelmessers (6) mit dem Teil des Zeigers (4a) übereinstimmt.

2.  Multifunktionswerkzeug nach Anspruch 1, **dadurch gekennzeichnet, dass** der Zirkel und das Lineal die gleichen Gesamtabmessungen besitzen.

3.  Multifunktionswerkzeug nach einem der vorangehenden Ansprüche, **dadurch gekennzeichnet, dass** sich der Winkel des Winkelmessers (6) proportional zu dem Abstand zwischen den Schenkeln (3a, 3b) des Zirkels ändert.

4. Multifunktionswerkzeug nach einem der vorhergehenden Ansprüche, **dadurch gekennzeichnet, dass** am anderen Schenkel (3b) des Zirkels ein Fenster (7) ausgebildet wird, durch das die Werte der Winkel des Winkelmessers (6) sichtbar/gemessen werden können.

5. Multifunktionswerkzeug nach einem der vorhergehenden Ansprüche, **dadurch gekennzeichnet, dass** auf dem rechten Teil (2b) des Lineals ein Fenster (8) ausgebildet wird, durch das die Werte des Radius des Zirkels sichtbar/gemessen werden können.

## Revendications

1. Un outil multifonctionnel (1) comprenant une règle, un compas, un rapporteur et une mesure du ratio en or, **caractérisé en ce que** lesdits quatre outils intégrés ont les caractéristiques suivantes :

   - la règle a une partie gauche de la règle (2a) et une partie droite de la règle (2b), qui sont reliées en un point de liaison (2c), les deux parties (2a, 2b) de la règle fusionnent et forment une seule partie de la règle lorsqu'en position étendue ;
   - le compas est formé sur la base de deux parties de la règle (2a, 2b), dans lesquelles

     une branche (3a) du compas est intégrée dans la partie gauche de la règle (2a) et l'autre branche du compas (3b) est respectivement intégrée dans la partie droite de la règle (2b) ;
     une branche (3a) du compas a un point d'appui et l'autre branche (3b) du compas a un moyen de traction;

   - la mesure du ratio en or est formée entre des parties de la règle (2a, 2b) et comprend un pointeur (4a) et un support (4b), dans lequel le pointeur (4a) est fixé à la partie droite (2b) de la règle en un premier point de connexion (4c) et le support (4b) est fixé à la partie gauche (2a) de la règle en un second point de connexion (4d), ledit pointeur (4a) et ledit support (4b) sont également interconnectés au niveau d'un troisième point de connexion (4e) de telle sorte que lorsque le rayon de la boussole augmente proportionnellement, une pointe (5) du pointeur (4a) change de place proportionnellement et la valeur du ratio en or qui est d'environ 1,618 reste entre la pointe (5) et ledit rayon ;
   - le rapporteur est verrouillé sur l'aiguille (4a) et l'autre branche (3b) du compas de telle sorte que la base du rapporteur (6) coïncide avec une partie de l'aiguille (4a).

2. L'outil multifonctionnel selon la revendication 1, **caractérisée en ce que** le compas et la règle occupent les mêmes dimensions globales.

3. L'outil multifonctionnel selon n'importe quelle des revendications précédentes, **caractérisée en ce que** l'angle du rapporteur (6) change proportionnellement à la variation de la distance entre les branches (3a, 3b) du compas.

4. L'outil multifonctionnel selon n'importe quelle des revendications précédentes, **caractérisée en ce que** une fenêtre (7) est formée dans l'autre branche (3b) du compas à travers laquelle les valeurs des angles du rapporteur (6) peuvent être vues / mesurées.

5. L'outil multifonctionnel selon n'importe quelle des revendications précédentes, **caractérisée en ce que** une fenêtre (8), à travers laquelle les valeurs du rayon de la boussole peuvent être vues / mesurées, est formée sur la partie droite (2b) de la règle.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106739681
- CN 106585218
- CN 201566322
- WO 9712767 A
- JP S5777594 B